# EUROPEAN PATENT SPECIFICATION

(11) **EP 0 808 208 B1**
(45) Date of publication and mention of the grant of the patent: **30.09.1998**
(21) Application number: 96901919.9
(22) Date of filing: 09.02.1996
(51) Int. Cl.: B01D 39/14, B01D 29/13

(54) **METHOD OF FORMING A FIBROUS FILTER ELEMENT**
METHODE ZUR HERSTELLUNG EINES FASERIGEN FILTERS
PROCEDE DE FABRICATION D'UN ELEMENT FILTRANT FIBREUX

(30) Priority: 10.02.1995 GB 9502625
(43) Date of publication of application: 26.11.1997
(73) Proprietor: Kalsep Limited, Camberley, Surrey, GU15 3DF (GB)
(72) Inventor: COSGROVE, Ronald, Charles 7 Yarnhams Close, Alton Hampshire GU34 5DH (GB)
(74) Representative: Lucas, Brian Ronald
(86) International application number: GB9600275
(87) International publication number: WO9624428

(56) References cited:
- EP-A- 0 207 797
- US-A- 3 063 888
- US-A- 3 415 384

## Description

The present invention relates to a fibrous filter element and to a method of forming a fibrous filter element suitable for use in apparatus used for filtering solids from liquids or for coalescing droplets of one liquid dispersed in another liquid.

EP 0 004 724 discloses an apparatus for removing contaminants from a liquid which comprises bundles of fibres aligned parallel to one another between two end plates. The end plates may be moved axially to stretch or compress the fibres. Liquid flows through the apparatus parallel to the fibre bundles.

EP 0 207 797 discloses another apparatus for removing contaminants from a liquid. This apparatus also comprises fibres connected at each end to end supports, which end supports can be moved away from or towards each other to place the fibres under tension or to relax any applied tension. The end supports can also be rotated relative to each other and an inner cylinder is used as support for the fibrous filter element.

EP 360 601 discloses another similar apparatus in which a helical spring replaces the cylinder to support the fibrous filter element.

In each of these arrangements the fibrous element comprises bundles of fibres attached to end supports. In EP-A-0 207 797 the filter element contains top and bottom woven edges with single fibre threads in between. The element is wound around the inner cylinder or spring and the woven edges are suitably seated to the end supports or may preferably be coated with adhesive and then wound onto the cylinder.

In either method, the procedure ensures that the filter element is sealed and secured to the end supports and withstands the stresses associated with the operation of the element as the fibres are twisted and compressed.

To facilitate the operation of the filter element, metal end plates are required; these have to be added to the filter assembly resulting in costly machining and assembly operations.

The present invention obviates the need for this, resulting in reduced cost and reduced weight which makes for easier handling and servicing.

Another problem associated with existing methods of securing the filter element to the end supports is that the ends of the element in the area of attachment to the end supports tend to be bulky due to the thickness of the adhesive layers, even when a minimum quantity of adhesive is used. This results in the packing density of the fibres at the end of the element being reduced compared to that at the centre of the element, resulting in channelling and reduced performance. In order to reduce this effect, it has been necessary to pack the element more tightly, resulting in a higher differential pressure across the filter and hence higher operating costs.

We have now found that by chemically encapsulating the bundle of fibres with the end supports, these disadvantages may be reduced.

The present invention provides a fibrous filter element which comprises a bundle of fibres provided with an inner support means and attached between two end supports, the bundle of fibres having woven edges at the point of attachment to the end supports and in which the woven edges of the bundle of fibres are encapsulated with the end support with an encapsulating resin.

The woven edges of the bundle of fibres can be attached to the end supports by any suitable means, for example, by metal hooks, fibrous hooks or other means which can hold the edges in position when they are encapsulated.

When metal hooks are used they can be arranged concentrically around the bundle.

The structure of the present invention is formed by attaching the woven edges of the bundle of fibres to the end supports, winding the bundle of fibres around the support member and encapsulating the attached woven edges of the bundle of fibres with the end supports by immersion in an encapsulating resin.

Suitable encapsulating resins include those which are inert to the liquids passing through the filter element and which set to form a liquid-impervious strong bond between the end plate and the edge of the bundle of fibres.

Suitable encapsulating resins are chemical potting compounds such as polyurethanes, epoxy potting compounds and thermoplastic resins such as hot melt plastics.

Suitable epoxy compounds are sold under the trade name "Permabond", e.g. two part epoxy resins and are widely available.

The encapsulation can be carried out by placing the encapsulating resin in a suitable mould, immersing the end of the element in the mould and setting the resin.

The inner support member can be a perforated cylinder, helical spring or other support member.

The fixing means and structure of the present invention can be used in association with existing fibrous filter structures, such as those described in EP 0 004 724, EP 0 207 797 and EP 360 601.

It is a feature of the present invention that the stresses encountered with prior art structures are reduced and are more evenly distributed and more of the stresses are transferred from the fibre bundle to the end supports, avoiding excess stress in the encapsulating resin.

Another feature is that the present invention produces a structure which is considerably lighter, easier and cheaper to produce and maintain than structures using prior art methods and also is less prone to degradation and has a longer life.

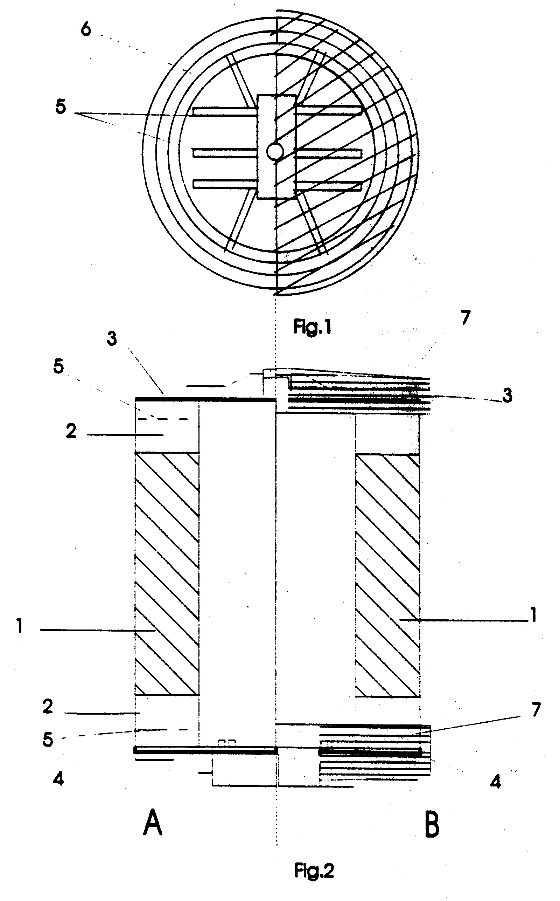

The invention will now be described with reference to the accompanying drawings in which:-
Fig. 1 is a plan view of a filter element showing a half section of the element before and afier encapsulation and
Fig. 2 is a side view of the filter element

Referring to the drawings side A of the drawings shows the filter element before encapsulation and side B shows the filter element afier encapsulation. The fibrous filter element comprises a bundle of fibres (1) having woven edges (2) in the proximity of the end supports (3) and (4). Hooks (5) are used to attach the edges (2) to the end supports (3) and (4) and the hooks (5) are arranged concentrically (6) around the bundle of fibres.

The ends (3) and (4) with the woven edges (2) attached are contacted with an epoxy resin "Permabond 3030" by placing the ends in a suitably shaped mould and pouring the resin around the ends. The resin is then hardened around the end to form an integrally sealed filter element (7) with a uniform arrangement of the fibres.

Thus the present invention enables a sealed, light weight, strong permanent attachment for the ends of the fibrous element to be obtained.

## Claims

1. A fibrous filter element which comprises a bundle of fibres (1) provided with an inner support means and attached between two end supports (3,4), the bundle of fibres having woven edges (2) at the point of attachment to the end supports, characterised in that the woven edges of the bundle of fibres are encapsulated with the end support with an encapsulating resin (7).

2. A fibrous filter element as claimed in claim 1 in which the woven edges of the bundle of fibres are attached to the end supports by means which can hold the edges in position when they are encapsulated.

3. A fibrous filter element as claimed in claim 2 in which the means which can hold the edges in position are metal or fibrous hooks (5).

4. A fibrous filter element as claimed in claim 3 in which the means which can hold the edges in position are metal hooks arranged substantially concentrically around the bundle of fibres.

5. A fibrous filter element as claimed in any one of the preceding claims in which the inner support means is a perforated cylinder or a helical spring.

6. A fibrous filter element as claimed in any one of the preceding claims in which the encapsulating resin is a resin which can set to form a liquid-impervious strong bond between the end support and the edge of the bundle of fibres.

7. A fibrous filter element as claimed in claim 6 in which the encapsulating resins is a polyurethane, an epoxy resin or a thermoplastic resin

8. A fibrous filter element as claimed in claim 7 in which the epoxy resin is a two part epoxy resin.

9. A method of forming a fibrous filter element as claimed in any one of the preceding claims which method comprises attaching woven edges (2) of a bundle of fibres (1) to corresponding end supports (3,4), winding the bundle of fibres around a support member and encapsulating the attached woven edges of the bundle of fibres with the end supports by immersion in an encapsulating resin.

10. A method of forming a fibrous filter element as claimed in claim 9 in which the encapsulation is carried out by placing the encapsulating resin in a mould, immersing the end of the element in the mould and setting the resin.

## Patentansprüche

1. Faserfilterelement, das ein Faserbündel (1) umfaßt, das mit einer inneren Halteeinrichtung versehen und zwischen zwei Endhalterungen (3, 4) angebracht ist, wobei das Faserbündel an den Punkten der Verbindung mit den beiden Endhalterungen gewebte Kanten (2) aufweist, dadurch gekennzeichnet, daß die gewebten Kanten des Faserbündels mittels eines verkapselnden Harzes (7) mit den Endhalterung verkapselt sind.

2. Faserfilterelement nach Anspruch 1, wobei die gewebten Kanten des Faserbündels mit einer Einrichtung an die Endhalterungen angebracht sind, die die Kanten in Position halten kann, wenn sie verkapselt werden.

3. Faserfilterelement nach Anspruch 2, wobei die Einrichtungen, die die Kanten in Position halten können, Metall- oder Faserhaken (5) sind.

4. Faserfilterelement nach Anspruch 3, wobei Einrichtungen, die die Kanten in Position halten können, Metallhaken sind, die im wesentlichen konzentrisch um das Faserbündel angeordnet sind.

5. Faserfilterelement nach einem der vorstehenden Ansprüche, wobei die innere Halterung ein gelochter Zylinder oder eine Schraubenfeder ist.

6. Faserfilterelement nach einem der vorstehenden Ansprüche, wobei das verkapselnde Harz ein Harz ist, das gehärtet werden kann, wodurch eine flüssigkeitsdichte, feste Bindung zwischen der Endhalterung und der Kante des Faserbündels entsteht.

7. Faserfilterelement nach Anspruch 6, wobei die verkapselnden Harze Polyurethan, ein Epoxyharz oder ein thermoplastisches Harz sind.

8. Faserfilterelement nach Anspruch 7, wobei das Epoxyharz ein Zweikomponenten-Epoxyharz ist.

9. Verfahren zur Herstellung eines Faserfilterelementes nach einem der vorstehenden Ansprüche, wobei das Verfahren das Anbringen der gewebten Kanten (2) eines Faserbündels (1) an entsprechende Endhalterungen (3, 4) das Wickeln des Faserbündels um ein Halteteil und das Verkapseln der angebrachten gewebten Kanten des Faserbündels mit den Endhalterungen durch Eintauchen in ein verkapselndes Harz umfaßt.

10. Verfahren zur Herstellung eines Faserfilterelementes nach Anspruch 9, wobei das Verkapseln dadurch erfolgt, daß das verkapselnde Harz in eine Form gegeben wird, die Enden des Elementes in die Form getaucht werden und das Harz gehärtet wird.

## Revendications

1. Elément de filtration fibreux, qui comprend un faisceau de fibres (1) pourvu d'un moyen de support interne et attaché entre deux supports d'extrémité (3, 4), le faisceau de libres ayant des bords tissés (2) au point d'attache aux supports d'extrémité, caractérisé en ce que lesdits bords tissés du faisceau de libres sont encapsulés avec le support d'extrémité au moyen d'une résine encapsulante (7).

2. Elément de filtration fibreux, tel que revendiqué dans la revendication 1, caractérisé en ce que lesdits bords tissés du faisceau de fibres sont attachés aux supports d'extrémité par des moyens qui peuvent tenir les bords en position quand ils sont encapsulés.

3. Elément de filtration fibreux, tel que revendiqué dans la revendication 2, caractérisé en ce que les moyens qui peuvent tenir les bords en position sont des crochets en métal ou en libres (5).

4. Elément de filtration fibreux, tel que revendiqué dans la revendication 3, caractérisé en ce que les moyens qui peuvent tenir les bords en position sont des crochets en métal disposés substantiellement de manière concentrique autour du faisceau de fibres.

5. Elément de filtration fibreux, tel que revendiqué dans l'une quelconque des revendications précédentes, caractérisé en ce que ledit moyen de support interne est un cylindre perforé ou un ressort hélicoïdal.

6. Elément de filtration fibreux, tel que revendiqué dans l'une quelconque des revendications précédentes, caractérisé en ce que ladite résine encapsulante est une résine qui peut se mettre à former un lien puissant imperméable au liquide entre le support d'extrémité et le bord du faisceau de fibres.

7. Elément de filtration fibreux, tel que revendiqué en revendication 6, caractérisé en ce que ladite résine encapsulante est un polyuréthanne, une résine époxyde ou une résine thermoplastique.

8. Elément de filtration fibreux, tel que revendiqué en revendication 7, caractérisé en ce que la résine époxyde est une résine époxyde à deux composants.

9. Méthode de fabrication d'un élément de filtration fibreux, tel que revendiqué dans l'une quelconque des revendications précédentes, ladite méthode comprenant les étapes consistant à attacher des bords tissés (2) d'un faisceau de fibres (1) à des supports d'extrémité correspondants (3, 4), à entourer le faisceau de fibres autour d'un élément support et à encapsuler les bords tissés attachés du faisceau de libres aux supports d' extrémité par immersion dans une résine encapsulante.

10. Méthode de fabrication d'un élément de filtration fibreux, telle que revendiquée dans la revendication 9, caractérisée en ce que l'encapsulation est effectuée en positionnant la résine encapsulante dans un moule, en immergeant l'extrémité de l'élément dans le moule et en durcissant la résine.
